# EUROPEAN PATENT SPECIFICATION

(11) **EP 1 440 036 B1**
(45) Date of publication and mention of the grant of the patent: **21.03.2007**
(21) Application number: 01980891.4
(22) Date of filing: 22.10.2001
(51) Int. Cl.: C01D 3/06, C01F 11/46, C01F 5/10

(54) **RECOVERY OF SODIUM CHLORIDE AND OTHER SALTS FROM BRINE**
GEWINNUNG VON NATRIUMCHLORID UND ANDEREN SALZEN AUS SOLE
EXTRACTION DU CHLORURE DE SODIUM ET DES AUTRES SELS CONTENUS DANS DE LA SAUMURE

(43) Date of publication of application: 28.07.2004
(73) Proprietor: Council of Scientific and Industrial Research;an Indian Reg. body incorporated under Reg. of Societies Act (Act XXI of 1860), New Delhi 110 001 (IN)
(72) Inventor: VOHRA, Rajinder, Nath, Central Salt and Marine, Bhavnagar, 364 002 Gujarat (IN); GHOSH, Pushpito, Kumar, Central Salt and Marine, Bhavnagar, 364 002 Gujarat (IN); MOHANDAS, Vadakke, Puthoor, Central Salt Marine, Bhavnagar, 364 002 Gujarat (IN); JOSHI, Himanshu, L., Central Salt and Marine, Bhavnagar, 364 002 Gujarat (IN); DERAIYA, Hasina, H., Central Salt and Marine, Bhavnagar, 364 002 Gujarat (IN); DAVE, Rohit, Harshadray, Central Salt and Marine, Bhavnagar, 364 002 Gujarat (IN); HALDER, Koushik, Central Salt and Marine, Bhavnagar, 364 002 Gujarat (IN); YADAV, Ran, Bahadur, Central Salt and Marine, Bhavnagar, 364 002 Gujarat (IN); DAGA, Sohan, Lal, Central Salt and Marine, Bhavnagar, 364 002 Gujarat (IN); MAJEETHIA, Kishorkumar M., Central Salt and Marine, Bhavnagar, 364 002 Gujarat (IN); SARAIYA, Upendra, P., Central Salt and Marine, Bhavnagar, 364 002 Gujarat (IN)
(74) Representative: Vercaemer, Laurence
(86) International application number: PCT/IN2001/000185
(87) International publication number: WO 2003/035550

(56) References cited:
- WO-A-00/12433
- GB-A- 1 142 901
- US-A- 3 099 528
- DATABASE CA [Online] CHEMICAL ABSTRACTS SERVICE, COLUMBUS, OHIO, US; MOTYKA, IGNACY ET AL: "Method and apparatus for multistage treatment of brines, especially from mining" retrieved from STN Database accession no. 118:150515 CA XP002200283 & PL 154 370 B (GLOWNY INSTYTUT GORNICTWA, POL.) 30 August 1991 (1991-08-30)

## Description

### Technical Field

The present invention relates to a process for recovery of common salt and marine chemicals of high purity in integrated manner, which boosts the viability of such recovery. The process is amenable to a wide range of brine compositions but especially attractive for brine compositions that are low in sulphate content and yield impure salt when the conventional process of solar salt production is followed.

### Background Art

Common salt, apart from being an essential dietary component, is a basic raw material for the manufacture of a wide variety of industrial chemicals viz. sodium carbonate (soda ash), sodium hydroxide (caustic soda), and chlorine. Besides, salt is used in textile, dairy, dyeing, food, fertilizer, paper and pharmaceutical industries. Marine gypsum is used in cement industries and in the preparation of high strength Plaster of Paris. It can also be used as a source of calcium in the preparation of calcium-based siliceous chemicals. Magnesium compounds find applications in agriculture, refractories, pharmaceuticals, rubber, polymer additives and fire retardant. Potash is an essential plant nutrient and chemical grade KCl is used for making other important potash chemicals.

Reference may be made to *"Rain Washing of Common Salt Heaps" by M P. Bhatt, P. S. Jesulpura and K. Sheshadri, Salt Research and Industry. 10(2), 1974, p* 13 who have reported that sea salt which is harvested and subjected to rain water washing has 0.21% w/w Ca, 0.60% w/w sulphate and 0.06% Mg. The salt requires upgradation to reduce the level of calcium and sulphate, especially for use in chloralkali industry.

Reference may be also made to *"Fractional Crystallisation of Salts from Sub-soil brines"* by V.P. Mohandas, S.J. Gohil, and S.D. Gomkale International Journal of Salt Lake Research 6: (1998), p 331, who have reported that sub-soil brines of Gujarat, India typically yield salt contaminated with 0.30-0.40 % w/w Ca, 0.80-1.00% w/w/ sulphate and 0.20-0.30% Mg after harvesting and washing of heaps with minimum quantity of water. This makes the salt unacceptable for industrial application.

The authors have attributed the higher Ca impurity in salt produced from sub-soil brine to the inherent composition of the brine.

In the article *"Washing of Strip Mined Rock and Solar Salt at Leslie Salt Corporation, U.S.A. (Symposium on Salt-1, Vol. 1, The Northern Ohio, Geological Society Incorporation, Cleveland, (1961), p 449-464),* A. Woodhill has stated that a washery is useful for reducing calcium, magnesium and sulphate impurities in solar salt. The main disadvantage of the method is that there are 10-15% losses, high capital investment is involved, and the maximum level of reduction of Ca is 70%.

In the article *"Manufacture of Salt by Series Feeding System"* by R. B. Bhatt, R. M. Bhatt, U. V. Chitnis, P. S. Jesulpura and K. Sheshadri, Salt Research and Industry, 11, 1979, p 9 it has been stated that sea salt can be prepared with lower calcium impurity by adopting series feeding method wherein the brine is subjected to fractional crystallization over narrower density ranges and the salt is harvested between 27.0-29.5° (Sp. Gr 1.23-1.26) Be. The drawbacks of this process are that yield of pure salt yield is reduced as it is harvested over a narrower density range and the salt is more contaminated with magnesium sulphate impurity which can only be satisfactorily removed with the help of a washery. Moreover, as found by the present inventors, series feeding does not yield improved quality salt when sub-soil brine is used.

In their patent application *(Indian Patent Application No. 315*/*DEL*/*95)* entitled *" A Process for the Preparation of Sodium Chloride containing Low Calcium Impurity from Sea Brine in Solar Salt Works",* M. H. Vyas, H. N. Shah, J. R. Sanghavi, M. R. Gandhi and R. J. Sanghavi have claimed that calcium can be reduced by up to 70% in the harvested salt through treatment with activated starch solution. The drawbacks of the process are that it is not applicable to sub-soil brines and also difficult to implement in large-scale commercial production because of the large requirement of starch solution. Another drawback is that magnesium and sulphate impurities would still be high.

In their patent application (PCT Application filed, 2001) entitled *"An improved Process for the Removal of Ca Ions from the brine by Marine Cyanobacteria ",* S. Mishra, P. K. Ghosh, M. R. Gandhi, A. M. Bhatt and S. A. Chauhan have claimed the production of low Ca salt from sea/sub-soil brine by mopping up Ca in the brine through certain types of marine cyanobacteria. The drawback of the process is that it is not readily amenable to scale up and magnesium and sulphate impurities would continue to pose a problem.

Besides the drawbacks indicated for the above process, none of them integrate with subsequent marine chemicals recovery and does not in any way improve the composition of bittern and, therefore, the process of such recovery is tedious as described below.

Potassium chloride is produced most commonly from potash deposits (e.g., Strassford deposits of Germany) either by froth floatation technique or by hot leaching process. Reference may be also made to the process described in *World Survey of Potash Resources,* The British Sulphur Corporation, London 1985, wherein potash is produced from Dead Sea brine through intermediate formation of carnallite (KCl.MgCl₂.6H₂O). However, sea water and sub-soil brines such as exist in India yield kainite (KCl.MgSO₄.3H₂O) double salt instead of carnallite because of the much higher sulphate content of the brine.

Reference may be also made to the paper "Potassium from Sea Water - A Daring Venture", Chemistry & Industry, 13 Nov. 1971, p 1309 by J. Kielland wherein it is stated that Dipycrylamine can be used to precipitate potash directly from sea water. The drawback of the process is the extremely high toxicity of the extracting reagent and the difficulty in recycling the extractant.

Reference may be made to "Manufacture of Potassium chloride and byproducts from Sea Bittern" by K. Sheshadri et al. published in Salt Research and Industry, April-July 1970, Vol. 7, page 39-44, wherein bittern is further concentrated in solar pans and after removing crude salt and Sels' mixts (mixture of NaCl and MgSO₄), mixed salt (NaCl and kainite) is formed in solar pans. Mixed salt is dispersed with high density bittern in proper proportion and heated to a temperature of 110° C when keiserite (MgSO₄.H₂O) is formed which is separated by filtering the slurry under hot conditions. The filtrate is cooled to ambient temperature, when carnallite crystallizes out. Carnallite is decomposed with water to get a solid mixture of sodium chloride and potassium chloride while magnesium chloride goes into solution. Solid mixture of potassium chloride and sodium chloride is purified using known techniques to produce pure potassium chloride. The drawbacks of this process are: Mixed Salt (containing Kainite) is obtained only after two earlier solid evaporites, i.e., crude salt and sels mixt. are removed separately. This is done by solar evaporation in pans, removal of salts from pans, and pumping of liquid into intermediate pans - all of which are highly labour and energy intensive. In order to produce these salts the bittern has to be concentrated to densities as high as 37.5° Be (Sp. Gr. 1.348) which requires longer evaporating period and/or larger area. Secondly, kainite type mixed salt is to be processed further by mixing the same with high density bittern and using hot extraction technique followed by cooling to extract carnallite from mixed salt. This is a tedious operation and involves high-energy consumption accompanied by loss of potash in various effluent streams. Thirdly, there is considerable loss of valuable magnesium in all the solid evaporites and there is no provision in this process to recover other products like high purity magnesia.

Reference may be also made to the articles by M. K. Raval & K. V. Satyanarayana in *"Bromine Content in Bittern From Salt Works in Kuda - Kutch Region* ", Salt Research and Industry, Vol. 4; No. 2, April 1967 pp 56-58 and by M. H. Jadhav and V. V. Chowgule in *"Bromine concentration with rise in Density of Sea Bittern" Fifth International Symposium on Salt,* from which it can be concluded that although there is increase in bromide concentration in bittern with evaporation, a significant part of the original bromide content in bittern tends to be lost in the solid evaporites in the course of recovery of potash via kainite salt as described above. This constrains bromine to be recovered at 29-32°Be' Sp. Gr 1.25-1.28 as a result of which its recovery is less efficient, since bromide concentration in bittern is in the range of 2-4 gL⁻¹.

Reference may be made to "Improved Treatment of Waste Brines" by Chr. Balarew, D. Rabadjieva and S. Tepavitcharova, (International Symposium on Salt 2000, page 551-554) for recovery of marine chemicals. The principle drawbacks of this process, which advocates crystallization of salt followed by removal of magnesium in bittern with lime, subsequent recovery of potash and recirculation of calcium chloride into bittern for the purpose of desulphatation, are that salt quality is not improved in any way, and the recovery of potash would involve removal of large quantities of water which is not feasible with solar evaporation.

Reference may be made to *"Potassium chloride from sea bittern - Part 2, Recovery of potassium chloride, magnesium sulphate and potassium sulphate"* by Gadre G. T., Rao A.V. and Bhavnagary H. M., Jr. of Sc. Ind. Res., 17(A), 9, (1958), p 376, wherein bittern is cooled to 10° -5° C to crystallize sulphate ion as epsom salt. The bittern after removal of sulphate is concentrated to crystallize carnallite. The main drawback of this process is that apart from high cost of refrigeration and bulk handling, the process removes sulphate to a maximum extent of 50% of sulphate originally present in bittern, which at a later stage will contaminate carnallite rendering the product impure.

US-A-3099528 discloses a process for the recovery of sodium chloride and marine chemicals from brine. After solar evaporation to recover most sodium chloride, calcium chloride is added to precipitate calcium sulphate. The brine is further evaporated to obtain sylvinite and carnallite. Potassium chloride is recovered. This is followed by heat treatment which gives magnesium oxide and a hydrogen chloride solution.

According to the present invention, desulphatation of low density brine, i.e., brine prior to crystallization of salt, with *in situ* generated calcium chloride or with calcium chloride in distiller waste is found to be a highly effective solution to all of the drawbacks described in the prior art. It has been found in the course of the invention that, although calcium impurity in salt is among the principal concerns which dictates its price and usability in chloralkali industry, the addition of calcium chloride to brine for the purpose of desulphatation does not increase calcium impurity of salt but actually decreases it. The primary reason for this is that addition of calcium chloride forcibly eliminates calcium sulphate as a precipitate because of the large calcium ion concentration in brine and the sparing solubility of calcium sulphate. As a result, less calcium sulphate coprecipitates with common salt during the crystallization of the latter at 25° Be' (Sp. Gr. 1.21) and beyond. The residual calcium in the brine which adheres to the salt crystals is easily washable as it is primarily in the form of calcium chloride which has much higher solubility than calcium sulphate. Removal of sulphate also reduces build up of magnesium sulphate impurity in salt and the adhering magnesium chloride impurity is easily washable. Most remarkably, sub-soil brine which yields salt of the lowest purity is especially attractive since the requirement of desulphating chemical is the least and the salt quality can be upgraded to purity even superior to that obtained presently for sea salt. As further established in the course of the invention, addition of calcium chloride to effect desulphatation does not in any way deteriorate the characterisitics of the bittern and carnallite can be recovered with ease. Further, as found in the course of the present invention, desulphatation also allows steady build-up of bromide concentration in bittern with negligible loss in solid evaporites.

Furthermore, desulphatation allows high purity magnesium chloride to be formed, a part of which can be converted into magnesium oxide of high purity with concomitant production of hydrochloric acid which can be utilised for production of calcium chloride. Another novelty of the present invention is the use of soda ash distiller waste for desulphatation.

Such waste is rich in calcium chloride and sodium chloride both of which are useful in the methodology of the invention.

The main object of the present invention is to provide an improved and integrated process for recovery of salt and marine chemicals which is centered around desulphatation of brine and obviates the drawbacks as detailed above.

Another object of the present invention is to prepare high purity salt, particularly from subsoil brine, through simple washing of the crystallised salt with water, and at virtually no extra cost, through the process of integration, and further to prepare salt of very high purity through only additional incremental cost.

Still another object of the present invention is to integrate salt manufacture with soda ash production and to use calcium rich distiller waste generated in soda ash plants for the desulphatation process.

Still another object is to recover salt and marine chemicals from high density, low sulphate sub-soil brine so as to maximize salt productivity, minimize requirement of desulphating chemicals and to achieve the highest differential improvement in salt quality.

Still another object of the present invention is to provide a seeding process for easy granulation of calcium sulphate leading to the easy separation from brine.

Yet another object of the present invention is to use the carbon dioxide gas produced when lime stone is dissolved in hydrochloric acid, to produce magnesium carbonate and potassium carbonate in the down stream processes, through well established processes.

Yet another object of the present invention is to observe that there is negligible loss of bromine when desulphated bittern is processed by further evaporation to produce carnallite, with the result that bromide can be enriched in the end bittern and can then be processed by the well established methods of bromine recovery which prefer higher concentration of bromide ions for better economy.

### Summary of invention

The present invention relates to recovery of industrial grade salt and marine chemicals from brine in an integrated manner. The process involves treatment of salt brine with calcium chloride to precipitate calcium sulphate, solar evaporation of desulphated brine in crystallisers to produce salt, solar evaporation of bittern to produce carnallite, decomposition of carnallite to recover sodium chloride and potassium chloride mixture and processing of this solid mixture to produce potassium chloride by known hot extraction technique. End bittern obtained after crystallisation of carnallite is calcined to produce high purity magnesia and hydrochloric acid. Limestone is treated with hydrochloric acid to produce calcium chloride, which is recycled for desulphatation of brine while the carbon dioxide can be recycled for preparation of carbonates of magnesium and potassium by well established routes.

### Statement of Invention:-

Accordingly, the present invention provides a process for recovery of common salt and marine chemicals from brine 3-24°Be (Sp. Gr. 1.02-1.20) in integrated manner comprising the steps of:
(i) reacting of 1-12 M hydrochloric acid which is obtained from calcination of magnesium chloride of end bittern at 600-800°C with calcerous material including limestone in stoichiometric ratio of one part of limestone with two parts of hydrochloric acid to prepare calcium chloride of 100-600 g/L concentration required for desulphatation;
(ii) treating said brine with calcium chloride as obtained in step (i) to produce granular calcium sulphate through a seeding process;
(iii) separating calcium sulphate from brine;
(iv) evaporating desulphated brine in solar pans up to 29-32° Be' (Sp. Gr 1.25-1.28) thereby crystallising out salt;
(v) washing salt with water or dilute brine to remove adhering chlorides of calcium and magnesium;
(vi) evaporating bittern in solar pans from density range of 29° Be' to 35.5° Be' (Sp. Gr. 1.25-1.32) to crystallise crude carnallite and thereafter recovering potassium chloride by known techniques;
(vii) recovering concentrated end bittern comprising mainly of magnesium chloride and enriched bromide; and
(viii) solidifying a part of the end bittern and calcining in the temperature range of 600-800°C to produce solid magnesium oxide and hydrochloric acid sufficient for recycling in step (i).

In still another embodiment of the present invention, calcium chloride is in distiller waste of soda ash industry in the concentration of 5-15% CaCl₂ in 0.8-1.2 mole of calcium to sulphate can also be used optionally.

In yet another embodiment of the present invention,treating the desulphated brine as obtained in step (ii) of claim 1 with barium chloride in 0.80-0.95 mole ratio of barium to residual sulphate ion to ensure near-complete desulphatation.

In still another embodiment of the present invention, marine chemicals include common salt, potassium chloride, magnesium chloride enriched with bromide, high purity magnesia and additionally, calcium sulphate with < 0.5% chloride, can be produced in an efficient and integrated manner from sub-soil/sea brine of 3-24° Be' (Sp. Gr. 1.02-1.20) density and sulphate concentration typically in the range of 5-18 g/L measured at 16°Be' (Sp. Gr. 1.12).

In yet another embodiment of the present invention, recovery of said marine products can be most efficiently undertaken through reduction of sulphate concentration of brine to a concentration in the range of 0.5-2.0 g/L.

In still another embodiment of the present invention, the reduction of sulphate is achieved by adding calcium chloride produced in situ.

In yet another embodiment of the present invention, removal of calcium sulphate from desulphated brine is facilitated through a seeding technique which allows easy granulation of the resultant calcium sulphate formed.

In still another embodiment of the present invention, sub-soil brine having high sodium chloride concentration (up to 18°Be') (Sp. Gr. 1.14) and low sulphate concentration (<6 g/L at 16° Be (Sp. Gr. 1.12)) is especially suitable as brine source.

In yet another embodiment of the present invention, brines located in the vicinity of soda ash plants can be treated with the distiller waste containing 5-15% calcium chloride. In still another embodiment of the present invention, wherein the primary process of desulphatation, salt recovery and carnallite production can be carried out readily in the field in large solar pans.

In yet another embodiment of the present invention, wherein desulphatation allows build up of bromide concentration in bittern up to 7.5 g/L at 35.5°Be' (Sp. Gr. 1.32) without any significant loss of bromide along with crystallized solids during evaporation.

### The invention is further explained in the following steps:

(I) Calcium chloride is prepared by reaction between limestone and recycled hydrochoride acid in leach tank under ambient condition followed by treatment with a small amount of lime to raise pH to 5.5 and filtration through a bed of calcium sulphate produced in the process itself to eliminate unwanted colour from iron impurities. The concentration of calcium chloride solution is preferably maintained between 410 and 440 gL⁻¹. Calcium chloride is alternatively obtained as a clear liquid after settling the distiller waste from soda ash industry and having typical composition of 10-12% CaCl₂ and 5-7% NaCl.
(II) Brine, preferably with density in the range of 15° Be'-22° Be' (Sp. Gr. 1.11-1.14), is treated with calcium chloride solution to eliminate calcium sulphate as described above. This reaction can be carried out in a reaction vessel or preferably in the field in large solar pans. When undertaken in a reaction vessel, a part of the output slurry of calcium sulphate is fed back to the vessel as seed. This makes the precipitate granular, which settles efficiently at the bottom.
(III) Desulphated brine is allowed to concentrate in the condenser and then charged into the crystalliser at around 25° Be' (Sp. Gr. 1.21) whereupon common salt crystallizes out. Evaporation of thus treated brine in solar pans yields salt of high purity when washed with small quantities of dilute brine or fresh water in the field to remove adhering calcium and magnesium chlorides.
(IV) Desulphatation with calcium chloride does not remove sulphate completely from the brine and small amount of calcium in the form of calcium sulphate coprecipitate with the crystallized salt. If salt of still higher purity is required, more complete desulphatation of brine may be carried out with barium chloride whose usage, however, is minimized because of the first stage of desulphatation with calcium chloride. To avoid any contamination of the salt with barium ion, the barium chloride is used in slightly less than the stoichiometric amount of sulphate present in the brine following treatment with CaCl₂, the sulphate concentration typically 11 being in the range of 1-3 g/L at 24° Be' (Sp. Gr. 1.20). It is advisable to carry out desulphatation with barium chloride in reaction vessels than in the open field.
(V) The mother liquor (bittern) obtained after crystallization of salt having density in the range of 29-30° Be' (Sp. Gr. 1.25-1.26) is fed to shallow impermeable solar pans where it undergoes further solar evaporation. As density rises to 32 to 33° Be' (Sp.Gr. 1.28-1.284), excess sodium chloride present in original bittern crystallizes out, which is removed. On further evaporation, carnallite double salt (KCl.MgCl-₂.6H₂O) crystallizes out at a density of 35 to 35.5° Be' (Sp.Gr. 1.318-1.324) along with residual NaCl as well established in the prior art.
(VI) Carnallite is decomposed with water to remove magnesium chloride and a mixture of potassium chloride and sodium chloride. Purification of the latter to obtain potassium chloride is achieved as well established in the prior art. Residual sodium chloride/potassium chloride is fed back into the carnallite pan for enhanced recovery in the subsequent cycle.
(VII) Bittern obtained after removal of carnallite, having a density of up to 35.5°Be' (Sp. Gr. 1.324), is a concentrated solution of magnesium chloride and is known as end bittern with magnesium chloride concentration ranging from 400 to 430 gL⁻¹. The end bittern was analysed for bromide and its concentration found to be 7.5 gL^{-l} (expressed as elemental bromine), i.e., nearly 3 times the bromide concentration at 29° Be' (Sp.Gr. 1.25) and 1.5 times the concentration at 32° Be' (Sp.Gr.1.28) which is typically the density range at which bromine is recovered in many plants. Since the volume of bittern is reduced by a factor of three in going from 29° Be' to 35.5° Be', (Sp. Gr. 1.25-1.32) there is essentially no loss of bromide during the process of concentration.

End bittern is reacted in calcination system at a temperature ranging from 600 to 800° C to form magnesium oxide and hydrochloric acid by the established process of the equation below.

MgCl₂·6H₂O → MgO + 2HCl + 5H₂O

The following examples are given by way of illustration and should not be construed to limit the scope of the invention:-

### Example 1

In this example brine of 24° Be' (Sp. Gr. 1.198) density, with 5.23 gL⁻¹ and 0.86 gL⁻¹ concentrations of SO₄²⁻ and Ca²⁺, respectively, was desulphated with calcium chloride.

Calcium chloride was prepared by dissolving limestone in concentrated hydrochloric acid followed by addition of lime in order to neutralize residual acid and precipitate out iron impurities. After settling, the decanted solution was filtered over a bed of calcium sulphate to yield a colorless solution with calcium chloride content estimated as 444 gL⁻¹. 3.6 L of brine was treated with 0.068 L of calcium chloride solution. After removal of calcium sulphate, which afer washing contained 0.45% Cl⁻¹, desulphated brine was found to contain 1.73 gL⁻¹ of SO₄²⁻. A part of desulphated brine was concentrated by solar evaporation till a density of 29° Be' (Sp. Gr. 1.25) was reached and most of the common salt crystallized out. The common salt, on chemical analysis, contained 0.2% Ca²⁺ whereas the salt without desulphatation had 0.35% Ca²⁺. The second part of desulphated brine of 24° Be' was treated with barium chloride in such a manner that 80% of residual sulphate content of brine was precipitated as barium sulphate. The brine was decanted and concentrated by solar evaporation till density of 29° Be' (Sp.Gr. 1.25) was achieved. Calcium content of the crystallised sodium chloride was found to be in the range of 0.03-0.04% after washing the salt with minimum quantity of water. The above example clearly shows that desulphatation of brine first with calcium chloride and then with barium chloride gives very pure quality salt while economizing on the use of barium chloride.

### Example 2

In this example field scale experiment was conducted to produce salt form sub soil brine in the salt field itself using calcium chloride prepared as in Example 1 as a desulphating agent. Subsoil brine of density 16.5° Be' (Sp.Gr. 1.128) had the following chemical composition: Mg, 6.3 gL⁻¹; Ca 1.17 gL⁻¹; SO₄ 6.5 gL⁻¹; Cl, 117.0 gL⁻¹; Na, 64.0 gL⁻¹. 50000 L of above brine was treated with 950 L of calcium chloride having a concentration of 440 gL⁻¹ CaCl₂ in condenser pan. The desulphated brine was concentrated to 25° Be' (Sp. Gr. 1.21) density and then transferred to crystalliser for salt crystallisation. The common salt crystallised between density range of 25° Be' (Sp. Gr. 1.121) to 30° Be' (Sp. Gr. 1.26) and was harvested, heaped and washed with minimum quantity of water to remove the adhering highly soluble calcium and magnesium impurities. The salt on dry basis was analysed as: Ca, 0.11% w/w; Mg, 0.09% w/w; SO₄, 0.06% w/w; NaCl 99.0% w/w. Total quantity of washed common salt obtaied in this experiment was approximately 5 tons.

### Example 3

40 L of 29°Be' (Sp. Gr. 1.25) desulphated bittern with chemical analysis as follows: Mg²⁺, 46.0 gL⁻¹; Na⁺, 44.1 gL⁻¹; K⁺, 13.9 gL-1; Ca²⁺, 2.0 gL ⁻¹; Cl⁻, 193 gL⁻¹; SO₄², 2.4 gL⁻¹; Br⁻, 2.5 gL⁻¹ was poured in shallow pans where it was allowed to concentrate using solar energy. Initially, this bittern got concentrated to a density of 32.2° Be' (Sp. Gr. 1.29) when excess salt separated out which was removed. On further evaporation with solar energy in a second shallow pan bittern got further concentrated up to a bittern density of 35.5° Be' (specific gravity 1.32). 5.5 kg of crude carnallite separated out with the following probable composition: KCl, 15.00%; MgCl₂; 28.22%; CaSO₄, 0.46%; CaCl₂, 0.36%; NaCl, 6.2%.

1 kg of the carnallite obtained as above was processed initially with 0.4 kg of water under ambient conditions. After separation of solid and liquid phases, solid phase was found to contain 121.4 g of KCl thereby indicating a recovery of 79% of KCl originally present in carnallite. The reset of it was contained in liquid phase. Since liquid phase indicated KCl analysis of 41.2 gL-1 which was almost similar to concentration of KCl in bittern before formation of carnallite, it was mixed with that bittern and allowed to concentrate in solar pans for further recovery of carnallite. This reduced loss of KCl to a great extent. The KCl/NaCl mixture so obtained was processed further using the well known hot extraction technique to produce potassium chloride containing 97.8% KCl.

After removal of carnallite, 11L of end bittern having chemical analysis as given below was obtained: Mg²⁺, 108.7 gL⁻¹; Na⁺, gL⁻¹, K⁺, 1.4 gL⁻¹; Ca²⁺, 1.6 gL⁻¹; Cl⁻, 324.5 gL⁻¹; SO₄²⁻, 0. gL⁻¹; Br⁻, 7.5 gL⁻¹; B, 0.11 gL⁻¹. A part of the end bittern was calcined at a temperature of 600-800° C producing crude magnesium oxide followed by washing with water to yield magnesium oxide containing 98.5% MgO. Hydrochloric acid produced in the process as by-product can be recycled for the process of production of calcium chloride described in Example 1.

### Example 4

In this example 29° Be' (Sp. Gr. 1.28) bittern obtained after recovery of salt from sub-soil brine was used as raw material for desulphatation in a reaction vessel. In the reaction vessel, bittern and calcium chloride flow rates were kept at 0.21 Lmin⁻¹ and 0.013 Lmin⁻¹, thereby producing 9.13 g/minute of solid calcium sulphate in the form of a slurry. 0.06 Lmin⁻¹ of seed slurry containing 18.26 gmin⁻¹ of calcium sulphate was added continously into the reaction vessel. Two third of the output slurry was recycled into the reaction vessel, as seed, while one third was used for further processing to enable a continous process to be achieved. The output calcium sulphate slurry was granular and easily settled to a concentration of 294gL⁻¹ to allow decantation of clear desulphated bittern which is otherwise more difficult.

The desulphatation was scaled up and 2400 litres of such desulphated bittern was obtained and concentrated in a solar pan. After removing excess sodium chloride at a density of 32.5° Be' (Sp. Gr. 1.288), bittern was further evaporated till carnallite deposited at a density of 35.5 ° Be' (Sp. Gr. 1.324). A total of 340 kg of carnallite crystallized out in the pan. Chemical analysis of carnallite is given below: CaSO₄, 0.816%; MgCl₂, 35.25%; NaCl, 8.42%; KCl, 15.03%. About 650 litre of end bittern, having following chemical analysis was obtained after removal of carnallite at a density of 35.5° (Sp. Gr. 1.324): Ca²⁺, 2.12 gL⁻¹; Mg², 113.3 gL⁻¹; SO₄²⁻, 0.33 gL⁻¹; Na, 1.50 gL⁻¹; K, 1.10 gL⁻¹; Cl⁻, 336.8 gL⁻¹; Boron as B, 0.1 gL⁻¹.

### Example 5

In the example of Example 1, brine was treated with settled distiller waste of a soda ash industry. Its composition were as follows: CaCl₂, 12.9%(w/v); NaCl, 6.6% (w/v). Similar results as those reported in Example 1 were obtained when the distiller waste was added to maintain the same ratio of calcium to sulphate as in the example of Example 1.

**The main advantages of the present invention are:**
(1) Very low sulphate bittern containing 1-3 g/L sulphate at 29° Be' (Sp. Gr. 1.25), which is known to yield a simple means of efficient recovery of potassium chloride and magnesium chloride via intermediate carnallite, can be generated from high sulphate brine such as sea water and other forms of brine typically in many regions of the world, through an economic process of desulphatation with the distiller waster of soda ash industry and with the further advantage of production of superior quality salt. This is especially applicable where salt production and soda ash production are integrated such as in several large industries.
(2) The improved process is also most attractive for certain sub soil brines which are low in sulphate concentration (< 6 g/L at 16.5° Be), (Sp. Gr. 1.13) have an inherent advantage of high salt concentration but yield poor quality salt with high (>0.3%) insoluble calcium impurity.
(3) Desulphatation of sea brine and such sub soil brine as described above allows bromide content in the brine to be progressively increased up to 7.5 g/L in 35.5° Be' (Sp. Gr. 1.32) end bittern with neglible loss of bromide during the process of concentration.
(4) When integrated with downstream production of magnesia, hydrochloric acid generated as by-product can be utilized in preparation of calcium chloride from inexpensive limestone and other inexpesive calcareous raw materials while the liberated carbon dioxide can be utilized for production of carbonate salts of potassium and magnesium through well established processes. This is especially advantageous where there is no accessibility of distiller waste.
(5) Forced desulphatation of brine eliminates the need for elaborate condensers normally employed to crystallize out maximum possible amount of calcium sulphate through natural solar concentration.
(6) Sub-soil brine having high sodium chloride concentration (up to 18°Be') (Sp. Gr. 1.14) and low sulphate concentration (<6 g/L at 16° Be' (Sp. Gr. 1.12)) is especially suitable as brine source to maximize productivity, minimize use of desulphating chemical, and maximize the advantage of the process in terms of salt quality upgradation.
(7) Brines located in the vicinity of soda ash plants can be treated with the distiller waste containing 5-15% calcium chloride and 1-7% sodium chloride so as to maximize the cost-effectiveness of the process.

## Claims

1. A process for recovery of common salt and marine chemicals from brine 3-24°Be (Sp. Gr. 1.02-1.20) in integrated manner comprising the steps of:
(i) reacting of 1-12 M hydrochloric acid which is obtained from calcination of magnesium chloride of end bittern at 600-800°C with calcerous material including limestone in stoichiometric ratio of one part of limestone with two parts of hydrochloric acid to prepare calcium chloride of 100-600 g/L concentration required for desulphatation;
(ii) treating said brine with calcium chloride as obtained in step (i) to produce granular calcium sulphate through a seeding process;
(iii) separating calcium sulphate from brine;
(iv) evaporating desulphated brine in solar pans up to 29-32° Be' (Sp. Gr. 1.25-1.28) thereby crystallising out salt;
(v) washing salt with water or dilute brine to remove adhering chlorides of calcium and magnesium;
(vi) evaporating bittern in solar pans from density range of 29° Be' to 35.5° Be' (Sp. Gr. 1.25-1.32) to crystallise crude carnallite and thereafter recovering potassium chloride by known techniques;
(vii) recovering concentrated end bittern comprising mainly of magnesium chloride and enriched bromide; and
(viii) solidifying a part of the end bittern and calcining in the temperature range of 600-800°C to produce solid magnesium oxide and hydrochloric acid sufficient for recycling in step (i).

2. A process as claimed in claim 1, wherein calcium chloride in distiller waste of soda ash industry in the concentration of 5-15% CaCl₂ in 0.8-1.2 mole of calcium to sulphate can also be used optionally.

3. A process as claimed in claim 1, wherein treating the desulphated brine as obtained in step (ii) of claim 1 with barium chloride in 0.80-0.95 mole ratio of barium to residual sulphate ion to ensure near-complete desulphatation.

4. A process as claimed in claim 1, wherein marine chemicals include common salt, potassium chloride, magnesium chloride enriched with bromide, high purity magnesia and additionally, calcium sulphate with < 0.5% chloride, can be produced in an efficient and integrated manner from sub-soil/sea brine of 3-24° Be' (Sp. Gr. 1.02-1.20) density and sulphate concentration typically in the range of 5-18 g/L measured at 16°Be' (Sp. Gr. 1.12).

5. A process as claimed in claim 1, wherein recovery of said marine products can be most efficiently undertaken through reduction of sulphate concentration of brine to a concentration in the range of 0.5-2.0 g/L.

6. A process as claimed in claim 1, wherein the reduction of sulphate is achieved by adding calcium chloride produced in situ.

7. A process as claimed in claim 1, wherein removal of calcium sulphate from desulphated brine is facilitated through a seeding technique which allows easy granulation of the resultant calcium sulphate formed.

8. A process as claimed in claim 1, wherein sub-soil brine having high sodium chloride concentration of up to 18°Be' (Sp. Gr. 1.14) and low sulphate concentration, <6 g/L at 16° Be' (Sp. Gr. 1.12), is especially suitable as brine source.

9. A process as claimed in claim 1, wherein brines located in the vicinity of soda ash plants can be treated with the distiller waste containing 5-15% calcium chloride.

10. A process as claimed in claim 1, wherein the primary process of desulphatation, salt recovery and carnalllite production can be carried out readily in the field in large solar pans.

11. A process as claimed in claim 1, wherein desulphatation allows build up of bromide concentration in bittern up to 7.5 g/L at 35.5°Be' (Sp. Gr. 1.32) without any significant loss of bromide along with crystallized solids during evaporation.

## Patentansprüche

1. Verfahren zur Gewinnung von gewöhnlichem Salz und Meereschemikalien aus Sole mit 3-24°Be' (Dichte 1,02-1,20) in einer integrierten Weise, das die folgenden Schritte umfasst:
(i) Umsetzen von 1-12 M Salzsäure, die aus der Kalzinierung von Magnesiumchlorid aus Endsole bei 600-800°C erhalten wird, mit kalkhaltigem Material einschließlich Kalkstein in einem stöchiometrischen Verhältnis von einem Teil Kalkstein zu zwei Teilen Salzsäure, um Calciumchlorid mit einer Konzentration von 100-600 g/l zu erhalten, die für die Desulfatisierung erforderlich ist;
(ii) Behandeln der Sole mit Calciumchlorid wie in Schritt (i) erhalten, um körniges Calciumsulfat durch ein Impfverfahren zu erzeugen;
(iii) Abtrennen von Calciumsulfat von der Sole;
(iv) Einengen von desulfatisierter Sole in Sonnenpfannen auf 29-32°Be' (Dichte 1,25-1,28), um **dadurch** Salz auszukristallisieren;
(v) Waschen von Salz mit Wasser oder verdünnter Sole, um anhaftende Chloride von Calcium und Magnesium zu entfernen;
(vi) Einengen von Sole in Sonnenpfannen vom Dichtebereich von 29 bis 35,5°Be' (Dichte 1,25-1,32), um rohen Carnallit zu kristallisieren, und danach Gewinnen von Kaliumchlorid durch bekannte Techniken;
(vii) Gewinnen von konzentrierter Endsole, die hauptsächlich Magnesiumchlorid und angereichertes Bromid umfasst; und
(viii) Verfestigen eines Teils der Endsole und Kalzinieren im Temperaturbereich 600-800°C, um festes Magnesiumoxid und Salzsäure zu erzeugen, die ausreichend für die Recyclierung im Schritt (i) ist.

2. Verfahren gemäß Anspruch 1, worin auch optional Calciumchlorid im Brennerabfall der Sodaindustrie mit einer Konzentration von 5-15% CaCl₂ in 0,8-1,2 Mol Calcium zu Sulfat verwendet werden kann.

3. Verfahren gemäß Anspruch 1, worin die desulfatisierte Sole wie in Schritt (ii) aus Anspruch 1 erhalten mit Bariumchlorid in einem Molverhältnis von 0,80-0,95 von Barium zu verbleibenden Sulfationen behandelt wird, um eine annähernd vollständige Desulfatisierung sicherzustellen.

4. Verfahren gemäß Anspruch 1, worin Meereschemikalien, die gewöhnliches Salz, Kaliumchlorid, mit Bromid angereichertes Magnesiumchlorid, hochreines Magnesiumoxid und zusätzlich Calciumsulfat mit <0,5% Chlorid einschließen, in einer wirksamen und integrierten Weise aus Untergrund/See-Sole mit 3-24°Be' (Dichte 1,02-1,20) und einer Sulfatkonzentration typischerweise im Bereich von 5-18 g/l, gemessen bei 16°Be' (Dichte 1,12), hergestellt werden können.

5. Verfahren gemäß Anspruch 1, worin die Gewinnung der Meeresprodukte am wirksamsten durch die Reduzierung der Sulfatkonzentration der Sole auf eine Konzentration im Bereich von 0,5-2,0 g/l vorgenommen werden kann.

6. Verfahren gemäß Anspruch 1, worin die Reduzierung von Sulfat durch Zugabe von in situ erzeugtem Calciumchlorid erreicht wird.

7. Verfahren gemäß Anspruch 1, worin die Entfernung von Calciumsulfat aus desulfatisierter Sole durch eine Impftechnik erleichtert wird, die die leichte Granulierung des resultierenden gebildeten Calciumsulfats erlaubt.

8. Verfahren gemäß Anspruch 1, worin die Untergrund-Sole mit hoher Natriumchloridkonzentration von bis zu 18°Be' (Dichte 1,14) und geringer Sulfatkonzentration, <6 g/l bei 16°Be' (Dichte 1,12), besonders geeignet als Solequelle ist.

9. Verfahren gemäß Anspruch 1, worin Solen, die sich in der Nähe von Sodafabriken befinden, mit dem Brennerabfall behandelt werden können, der 5-15% Calciumchlorid enthält.

10. Verfahren gemäß Anspruch 1, worin der primäre Prozess der Desulfatisierung, Salzgewinnung und Carnallitproduktion leicht im Gebiet großer Sonnenpfannen durchgeführt werden kann.

11. Verfahren gemäß Anspruch 1, worin die Desulfatisierung den Aufbau einer Bromidkonzentration in der Sole auf 7,5 g/l bei 35,5°Be' (Dichte 1,32) ohne einen signifikanten Verlust an Bromid mit den kristallisierten Feststoffen während der Einengung erlaubt.

## Revendications

1. Procédé pour récupérer du sel commun et des produits chimiques marins à partir d'une saumure à 3-24° Baumé (densité 1,02 - 1,20) d'une manière intégrée comprenant les étapes de :
(i) réaction d'acide chlorhydrique 1-12 M qui est obtenu par calcination du chlorure de magnésium d'eau-mère terminale à 600-800°C avec un matériau calcaire incluant du calcaire dans un rapport stoechiométrique d'une partie de calcaire avec deux parties d'acide chlorhydrique pour préparer du chlorure de calcium de concentration 100-600 g/L nécessaire pour la désulfatation ;
(ii) traitement de ladite saumure avec du chlorure de calcium tel qu'obtenu dans l'étape (i) pour produire du sulfate de calcium granulaire par un procédé d'ensemencement ;
(iii) séparation du sulfate de calcium d'avec la saumure ;
(iv) évaporation de la saumure désulfatée dans des bacs solaires jusqu'à 29-32° Baumé (densité 1,25 -1,28) pour cristalliser du sel ;
(v) lavage du sel avec de l'eau ou de la saumure diluée pour retirer les chlorures de calcium et de magnésium qui adhèrent ;
(vi) évaporation de l'eau-mère dans des bacs solaires de la plage de densité de 29° Baumé à 35,5° Baumé (densité 1,25 - 1,32) pour cristalliser de la carnallite brute puis récupération du chlorure de potassium par des techniques connues ;
(vii) récupération d'eau-mère terminale concentrée comprenant principalement du chlorure de magnésium et du bromure enrichi ; et
(viii) solidification d'une partie de l'eau-mère terminale et calcination dans la plage de température de 600 - 800°C pour produire de l'oxyde de magnésium solide et de l'acide chlorhydrique suffisant pour le recyclage dans l'étape (i).

2. Procédé selon la revendication 1 où du chlorure de calcium dans les déchets de distillation de l'industrie du carbonate de sodium en la concentration de 5 - 15 % de CaCl₂ dans 0,8 - 1,2 mole de calcium au sulfate peut aussi être utilisé éventuellement.

3. Procédé selon la revendication 1 où le traitement de la saumure désulfatée telle qu'obtenue dans l'étape (ii) de la revendication 1 avec du chlorure de baryum dans un rapport molaire des ions baryum aux ions sulfate résiduels de 0,80 - 0,95 pour garantir une désulfatation sensiblement totale.

4. Procédé selon la revendication 1 où les produits chimiques marins incluent du sel commun, du chlorure de potassium, du chlorure de magnésium enrichi en bromure, de la magnésie de haute pureté et en outre du sulfate de calcium avec < 0,5 % de chlorure, peuvent être produits d'une manière efficace et intégrée à partir de saumure souterraine/marine de densité 3-24° Baumé (densité 1,02 - 1,20) et de concentration en sulfate typiquement dans la plage de 5-18 g/L mesurée à 16° Baumé (densité 1,12).

5. Procédé selon la revendication 1 où la récupération desdits produits marins peut être réalisée le plus efficacement par réduction de la concentration en sulfate de la saumure à une concentration dans la plage de 0,5 - 2,0 g/L.

6. Procédé selon la revendication 1 où la réduction du sulfate est obtenue par addition de chlorure de calcium produit in situ.

7. Procédé selon la revendication 1 où le retrait du sulfate de calcium de la saumure désulfatée est facilité par une technique d'ensemencement qui permet une granulation aisée du sulfate de calcium formé résultant.

8. Procédé selon la revendication 1 où une saumure souterraine ayant une grande concentration de chlorure de sodium pouvant atteindre 18° Baumé (densité 1,14) et une faible concentration de sulfate, < 6 g/L à 16° Baumé (densité 1,12), est particulièrement appropriée comme source de saumure.

9. Procédé selon la revendication 1 où des saumures situées au voisinage d'installations de carbonate de sodium peuvent être traitées avec les déchets de distillation contenant 5 - 15 % de chlorure de calcium.

10. Procédé selon la revendication 1 où le procédé primaire de désulfatation, de récupération de sel et de production de carnallite peut être mis en oeuvre aisément sur le site dans de grands bacs solaires.

11. Procédé selon la revendication 1 où la désulfatation permet l'augmentation de la concentration de bromure dans l'eau-mère jusqu'à 7,5 g/L à 35,5° Baumé (densité 1,32) sans aucune perte sensible de bromure avec les solides cristallisés pendant l'évaporation.
